# FASCICULE DE BREVET EUROPEEN

(11) **EP 0 866 326 B1**
(45) Date de publication et mention de la délivrance du brevet: **11.06.2003**
(21) Numéro de dépôt: 98400621.3
(22) Date de dépôt: 17.03.1998
(51) Int. Cl.: G01M 3/16, G01M 3/18

(54) **Installation de détection et de localisation de fuites de liquides**
Installation zur Aufspürung und Ortung von Flüssigkeitsleckagen
Installation for the detection and localisation of liquid leaks

(30) Priorité: 18.03.1997 FR 9703253
(43) Date de publication de la demande: 23.09.1998
(73) Titulaire: TTK, 92100 Boulogne (FR)
(72) Inventeur: Balatchev, Stefan, 92320 Chatillon (FR)
(74) Mandataire: Dawidowicz, Armand

(56) Documents cités:
- FR-A- 2 432 133
- US-A- 4 095 174

## Description

La présente invention concerne une installation de détection de fuites de liquide susceptible de détecter et de localiser des fuites dès leur apparition, en particulier dans des endroits à risques.

On connaît, par le document EP-A-703 440, un dispositif de détection et de localisation de fuites de fluide circulant dans des canalisations qui sont, en partie au moins, enterrées ou enfuies dans le sol. Ce dispositif se propose de faciliter l'identification et la reconnaissance par un opérateur portant un casque diffusant des ondes sonores représentatives du signal capté et amplifié du bruit caractéristique provoqué par la fuite du fluide. Un tel dispositif reste cependant tributaire des bruits parasitaires provenant de l'environnement, ce qui nécessite des moyens relativement complexes.

Dans le document WO-A-9427129, un dispositif de détection de fuites propose d'utiliser un câble de détection composite présentant une paire de conducteurs isolés et une paire de conducteurs non isolés, des impulsions étant appliquées aux conducteurs isolés et les fuites étant détectées et localisées en utilisant les techniques de réflectométrie dans le temps. Ainsi, suite à des impulsions envoyées dans une ligne de transmission, le changement dans le temps d'arrivée ou la forme des impulsions réfléchies indique une fuite, la localisation de la fuite le long du câble et la conductivité ou la non-conductivité du liquide.

On connaît également, par FR-A-2 709 347, une installation basée sur le principe de l'établissement d'un courant entre les fils résistifs d'un câble détecteur au contact d'un liquide, la mesure de ce courant et de la tension aux bornes du câble permettant d'estimer la distance entre le début du câble et le point de fuite. Cette installation comporte une centrale de mesure constituée d'une série de carte de mesure analogique, d'une carte à micro-contrôleur récupérant séquentiellement les informations analogiques desdites cartes et les convertissant en données numériques en vue d'un affichage et/ou d'une impression desdites informations pour permettre la détection et la localisation de fuites éventuelles.

Les installations jusqu'à présent citées utilisent toutes des informations analogiques qui sont détectées, mesurées et converties en données numériques. Par conséquent, toutes les informations recueillies lors de la détection d'un événement ou d'un non-événement sont soumises à des risques d'erreurs qui peuvent être plus ou moins importants.

Ainsi, dans le cas de EP-A-703 440, une détection du bruit caractéristique d'une fuite de fluide peut être rendue difficile du fait de la présence d'un bruit de fond parasite. Dans WO-A-9427129, on effectue également des mesures analogiques visant à déterminer les changements de fréquence des signaux réfléchis ou le changement de forme de ces signaux. Par conséquent, là encore, la détection est soumise à des risques d'erreurs importants. De même, pour FR-A-2 709 347, où la détection est réalisée par mesure de tension aux bornes d'une résistance étalon et aux bornes du câble détecteur.

Par conséquent, il convient de pouvoir s'affranchir des mesures analogiques et de détecter une fuite selon une mesure numérique transmise à une unité centrale de gestion.

A cet effet, l'invention a pour objet une installation de détection et de localisation de fuites de liquides comportant une unité centrale et un bus de transmission des informations, caractérisée en ce qu'elle comporte au moins un module de détection et de localisation d'une fuite, chaque module étant constitué d'une unité de détection comportant au moins un câble détecteur relié à un oscillateur, dans lequel, lors d'une mise sous tension et en présence d'une fuite, la tension d'entrée oscille entre deux seuils de basculement induisant une tension de sortie oscillant sous forme d'un signal de sortie pratiquement binaire, et d'une unité de gestion comportant des moyens d'analyse et de traitement de la période et du rapport cyclique des signaux de sortie des unités de détection, ladite installation comprenant en outre des moyens de transmission des informations sous forme numérique au travers du bus de transmission vers l'unité centrale.

Cette installation est basée sur le principe du changement de fréquence d'un oscillateur en fonction de la résistance équivalente d'un groupe comprenant une résistance et une capacité qui détermine la période du signal généré.

En effet, le câble détecteur qui, de préférence, comprend au moins deux conducteurs de résistance linéique constante, joue le rôle de la résistance. Lors d'une fuite, la présence d'un liquide conducteur introduit une résistance supplémentaire entre les deux conducteurs. De ce fait, le conducteur connecté à la capacité est divisé et on obtient ainsi un diviseur résistif de tension dont les valeurs des deux résistances varient en fonction de la localisation de la fuite sur le câble détecteur. Le diviseur de tension créé par la fuite décale la tension d'entrée du comparateur de l'oscillateur, celle-ci déterminant la fréquence du signal de sortie et on obtient alors un signal quasi-binaire dont la fréquence dépend de la localisation de la fuite sur le câble détecteur. La capacité d'entrée du comparateur et la résistance de la fuite constituent une deuxième groupe RC et elles jouent sur le rapport cyclique du signal de telle sorte qu'on peut également évaluer l'importance de la fuite sur le câble détecteur.

Le module de détection peut alors analyser et traiter la période et le rapport cyclique de ce signal de sortie et envoyer ensuite cette information vers l'unité centrale. A chaque module de détection on attribue un numéro logique permettant à l'unité centrale de reconnaître les différents modules de l'installation.

En ce qui concerne le mode de dialogue entre l'unité centrale et les modules, selon une première forme de réalisation de l'invention, le dialogue entre l'unité centrale et un module de détection est du type maître-esclave. La centrale comporte des moyens d'interrogation un par un des modules qui sont en état de veille sauf lorsque l'unité centrale les interroge, la mesure s'effectuant au cours du dialogue entre l'unité centrale et le module interrogé.

Selon une seconde forme de réalisation, les modules de détection sont constamment en état de veille et comportent des moyens de reconnaissance d'un défaut qui les réveillent afin de résoudre les conflits lorsque plusieurs modules émettent simultanément, le dialogue étant alors du type multi-maîtres. L'unité centrale comporte des moyens d'interrogation un par un des modules ce qui permet d'effectuer la gestion et le test de fonctionnement des modules.

De préférence, on utilise un câble détecteur du type comportant quatre conducteurs de résistance linéique constante. Deux des conducteurs sont totalement isolés de l'environnement extérieur tandis que les deux autres conducteurs sont incorporés dans une gaine semi-conductrice de manière à les laisser accessibles électriquement par des liquides et non par des solides. Ces conducteurs sont de préférence regroupés par deux de manière à éviter toute création de courants parasites et à permettre la détection d'une rupture dans l'un de ces conducteurs. En particulier, en cas d'une rupture, le module de détection envoie alors une information appropriée vers l'unité centrale.

La résistance linéique des conducteurs est déterminée en fonction du pas d'incrustation et de l'alliage utilisé. De préférence, cette résistance se situe dans la plage de 1 à 20 Ohm par mètre.

De préférence, chaque module comporte deux câbles détecteurs positionnés en aval et en amont de l'unité de gestion. Une telle forme de réalisation permet d'obtenir une installation dans laquelle les zones sous surveillance disparaissent au profit de plusieurs secteurs, déterminés par des modules de détection connectés entre eux en parallèle et/ou en série, avec un câble de liaison à partir du bus de terrain.

On obtient ainsi une plus grande facilité et liberté d'installation des modules de détection et de localisation. Il est en effet possible de mettre en place ces modules exclusivement au niveau des zones à risques.

De plus, chaque module transmet ses informations d'une manière sûre, l'unité centrale comportant un protocole de détection et de correction d'erreurs annulant pratiquement le bruit.

L'unité centrale peut comporter trois entrées auxquelles pourront être connectées jusqu'à une centaine de modules de détection par entrée.

Dans l'installation selon l'invention, l'oscillateur utilisé est un oscillateur à comparateur. Un tel oscillateur permet avantageusement d'utiliser un câble détecteur présentant une résistance comprise entre 10 et 5000 Ohms. De préférence, le comparateur est de technologie CMOS permettant d'obtenir un courant d'entrée négligeable.

Selon une première forme de réalisation de l'invention, le comparateur est de type analogique tel qu'un comparateur discret ou un amplificateur opérationnel, alimenté avec une tension symétrique ou asymétrique.

Selon une seconde forme de réalisation de l'invention, le comparateur est de type numérique tel qu'un trigger de Schmitt.

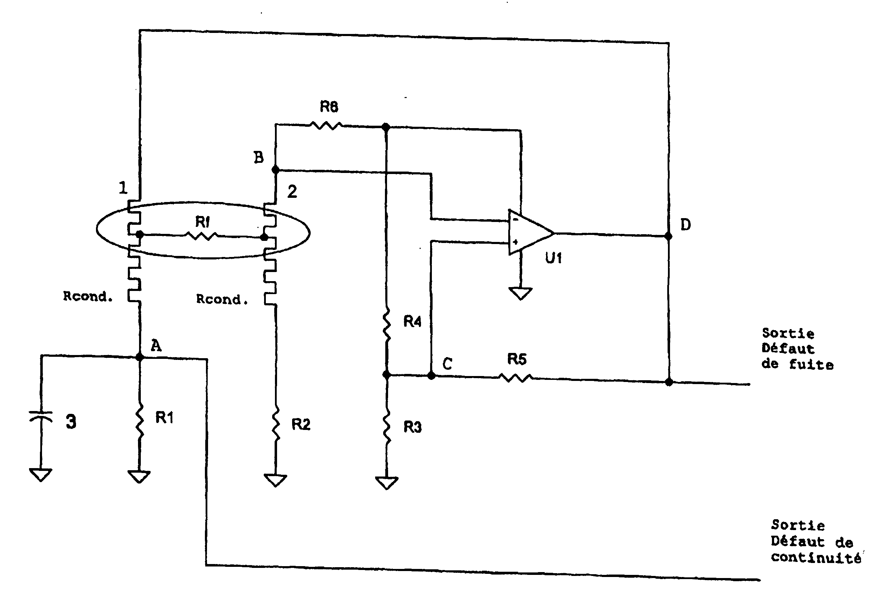

On décrira maintenant l'invention plus en détail en référence au dessin dans lequel la figure unique représente schématiquement un oscillateur à comparateur utilisé dans une installation selon l'invention.

Lors de la mise sous tension, le potentiel de la capacité 3 de l'oscillateur au point A est nul. Une résistance R2 connecte l'entrée d'inversion du comparateur U1, point B, à la masse.

Le potentiel au point C permet de déterminer le seuil haut de basculement de l'oscillateur et il est toujours supérieur à 0 V. De ce fait, la tension en sortie du comparateur U1 (point D) est égale à une tension présentant une valeur donnée, par exemple 5 V. La capacité 3 commence à se charger par la résistance Rcond du conducteur 1 et cette dernière étant inférieure à une résistance R1, la tension atteint pratiquement une valeur de tension égale à 5 V.

On a donc au point A, en entrée, et au point D en sortie des tensions correspondant à une valeur logique un. Cet état est stationnaire lorsqu'il n'existe aucun défaut dans l'installation.

Lors d'une fuite, on crée entre le conducteur 1 et le conducteur 2 du câble détecteur, une résistance supplémentaire Rf. Le conducteur 1 se divise alors en deux constituant ainsi un diviseur de tension. En outre la résistance de fuite Rf forme avec une résistance R2 un second diviseur de tension.

Le potentiel au point B est alors supérieur au potentiel du point C et le comparateur U1 bascule. La tension en sortie du comparteur U1 au point D est alors de 0 V et le potentiel au point C est alors très proche de O V également. On obtient alors le seuil bas de basculement et l'état de sortie du comparateur U1 reste inchangé jusqu'à ce que le potentiel au point B descende également à 0 V.

La capacité 3 commence à se décharger par la résistance du conducteur 1. La tension aux bornes de la capacité 3 devient alors 0 V et le comparateur U1 bascule à nouveau. De ce fait, la tension de sortie du comparateur U1 reprend une tension d'une valeur donnée telle que 5 V et la capacité 3 se recharge puis se décharge à nouveau. Le potentiel au point B oscille donc entre un seuil haut et un seuil bas et de ce fait au point D en sortie, on obtient une oscillation d'un signal binaire tant que la fuite existe.

Le choix approprié des valeurs des résistances R1 à R6 permet d'obtenir un signal de forme rectangulaire asymétrique dont la durée de pause ne dépend que de la localisation de la fuite le long du câble détecteur et le rapport cyclique est en fonction de l'importance de la fuite.

De préférence, R5 est inférieur à R4, R2 est inférieur à R6, R1 et R2 sont inférieurs à la résistance des conducteurs et R4 est sensiblement équivalente à R3.

En cas de rupture de l'un des conducteurs constituant le câble détecteur la capacité C se décharge et le potentiel au point A présente une valeur nulle. Il suffit par conséquent de détecter le niveau logique aux bornes de la capacité C pour déterminer l'état du câble conducteur, un logique en cas de fonctionnement normal et zéro logique en cas d'un défaut de continuité dans le câble.

## Revendications

1. Installation de détection et de localisation de fuites de liquides comportant une unité centrale et un bus de transmission des informations,
**caractérisée en ce qu'**elle comporte au moins un module de détection et de localisation d'une fuite, chaque module étant constitué d'une unité de détection comportant au moins un câble détecteur relié à un oscillateur, dans lequel, lors d'une mise sous tension et en présence d'une fuite, la tension d'entrée oscille entre deux seuils de basculement induisant une tension de sortie oscillant sous forme d'un signal de sortie pratiquement binaire, et d'une unité de gestion comportant des moyens d'analyse et de traitement de la fréquence des signaux de sortie des unités de détection, ladite installation comprenant en outre des moyens de transmission des informations sous forme numérique au travers du bus de transmission vers l'unité centrale.

2. Installation selon la revendication 1,
**caractérisée en ce que** chaque module de détection comporte un câble détecteur amont et un câble détecteur aval.

3. Installation selon l'une des revendications 1 et 2,
**caractérisée en ce que** l'oscillateur est un oscillateur à comparateur.

4. Installation selon la revendication 3,
**caractérisée en ce que** le comparateur est de type analogique tel qu'un comparateur discret ou un amplificateur.

5. Installation selon la revendication 3,
**caractérisée en ce que** le comparateur est de type numérique tel qu'un trigger de Schmitt.

6. Installation selon l'une des revendications 1 à 3,
**caractérisée en ce qu'**un câble détecteur comporte quatre conducteurs de résistance linéique constante, deux des conducteurs étant incorporés dans une gaine isolante et les deux autres étant incorporés dans une gaine semi-conductrice.

7. Installation selon l'une des revendications 1 à 6,
**caractérisée en ce que** chaque module de détection a un numéro logique reconnaissable par l'unité centrale.

8. Installation selon l'une des revendications 1 à 7,
**caractérisée en ce que** l'unité centrale comporte des moyens d'interrogation un par un des modules de détection qui sont en état de veille sauf lorsque l'unité centrale les interroge, la mesure s'effectuant au cours du dialogue entre l'unité centrale et le module interrogé.

9. Installation selon l'une des revendications 1 à 8,
**caractérisée en ce que** les modules de détection sont constamment en état de veille et comportent des moyens de reconnaissance d'un défaut qui les réveillent.

10. Installation selon la revendication 9,
**caractérisée en ce que** le bus de transmission est agencé pour résoudre les conflits lorsque plusieurs modules de détection émettent simultanément en établissant un dialogue du type multi-maîtres.

11. Installation selon l'une des revendications 1 à 10,
**caractérisée en ce que** les modules de détection sont connectés en série et/ou en parallèle à un câble de liaison relié à l'unité centrale.

## Patentansprüche

1. Anlage zur Detektion und Lokalisierung von Flüssigkeitsleckagen, bestehend aus einer Zentraleinheit und einem Datenübertragungsbus,
**dadurch gekennzeichnet, dass** sie mindestens ein Modul zur Detektion und Lokalisierung einer Leckage aufweist, wobei jedes Modul aus einer Detektionseinheit, welche mindestens ein Detektorkabel aufweist, das mit einem Oszillator verbunden ist, in welchem, beim Anlegen einer Spannung und bei Vorhandensein einer Leckage, die Eingangsspannung zwischen zwei Schaltschwellenwerten oszilliert, und dadurch eine Ausgangsspannung in der Form eines praktisch binären Ausgangssignals induziert, und einer Steuerungseinheit, welche Mittel zur Analyse und Verarbeitung der Frequenz der Ausgangssignale der Detektoreinheiten aufweist, besteht, wobei die genannte Anlage außerdem Mittel zur Übertragung der Informationen in digitaler Form über den Übertragungsbus zur Zentraleinheit aufweist.

2. Anlage nach Anspruch 1,
**dadurch gekennzeichnet, dass** jedes Detektionsmodul ein Detektionskabel stromaufwärts und ein Detektionskabel stromabwärts aufweist.

3. Anlage nach einem der Ansprüche 1 und 2,
**dadurch gekennzeichnet, dass** der Oszillator ein Oszillator mit Komparator ist.

4. Anlage nach Anspruch 3,
**dadurch gekennzeichnet, dass** der Komparator ein Analog-Komparator, etwa ein diskreter Komparator oder ein Verstärker, ist.

5. Anlage nach Anspruch 3,
**dadurch gekennzeichnet, dass** der Komparator ein Digital-Komparator, etwa ein Schmitt-Trigger, ist.

6. Anlage nach einem der Ansprüche 1 bis 3,
**dadurch gekennzeichnet, dass** ein Detektionskabel vier Adern mit konstantem Widerstandsbelag aufweist, wobei zwei der Adern in einer Isolationshülle integriert sind und die beiden anderen in einer Halbleiterhülle integriert sind.

7. Anlage nach einem der Ansprüche 1 bis 6,
**dadurch gekennzeichnet, dass** jedes Detektionsmodul über eine logische Nummer verfügt, welche durch die Zentraleinheit erkennbar ist.

8. Anlage nach einem der Ansprüche 1 bis 7,
**dadurch gekennzeichnet, dass** die Zentraleinheit Mittel zur einzelnen Abfrage der Detektionsmodule aufweist, welche im Standby-Zustand sind, außer wenn die Zentraleinheit sie abfragt, wobei die Messung während des Dialogs zwischen der Zentraleinheit und dem jeweils abgefragten Modul stattfindet.

9. Anlage nach einem der Ansprüche 1 bis 8,
**dadurch gekennzeichnet, dass** die Detektionsmodule ständig im Standby-Zustand sind und Fehlererkennungsmittel aufweisen, die sie aktivieren.

10. Anlage nach Anspruch 9,
**dadurch gekennzeichnet, dass** der Übertragungsbus derart eingerichtet ist, um Kollisionen zu lösen, wenn mehrere Detektionsmodule gleichzeitig senden, wobei ein Dialog vom Typ Multi-Master aufgebaut wird.

11. Anlage nach einem der Ansprüche 1 bis 10,
**dadurch gekennzeichnet, dass** die Detektionsmodule in Reihe und/oder parallel mit einem Verbindungskabel geschaltet sind, welches mit der Zentraleinheit verbunden ist.

## Claims

1. Installation for the detection and localisation of liquid leaks, comprising a central processing unit and a data transmission bus,
**characterised in that** it comprises at least one module for the detection and localisation of a leak, each module being made up of a detection unit containing at least one detector cable connected to an oscillator, in which, during powering up and in the presence of a leak, the input voltage oscillates between two toggle thresholds inducing an oscillating output voltage in the form of a virtually binary output signal, and of a management unit containing means for the analysis and processing of the frequency of the output signals from the detection units, the said installation also comprising means for the transmission of data in digital form via the transmission bus to the central processing unit.

2. Installation according to Claim 1,
**characterised in that** each detection module has an upstream detector cable and a downstream detector cable.

3. Installation according to one of Claims 1 and 2,
**characterised in that** the oscillator is a comparator oscillator.

4. Installation according to Claim 3,
**characterised in that** the comparator is of the analogue type, such as a discrete comparator or an amplifier.

5. Installation according to Claim 3,
**characterised in that** the comparator is of the digital type, such as a Schmitt trigger.

6. Installation according to one of Claims 1 to 3,
**characterised in that** a detector cable contains four conductors of constant resistance load per unit length, two of the conductors being incorporated in an insulating sheath and the other two being incorporated in a semi-conductive sheath.

7. Installation according to one of Claims 1 to 6,
**characterised in that** each detection module has a logic number that can be recognised by the central processing unit.

8. Installation according to one of Claims 1 to 7,
**characterised in that** the central processing unit contains means for interrogating one by one the detection modules that are in the watch state except when the central processing unit is interrogating them, the measurement taking place during the dialogue between the central processing unit and the interrogated module.

9. Installation according to one of Claims 1 to 8,
**characterised in that** the detection modules are constantly in the watch state and contain means for recognising a fault that activates them.

10. Installation according to Claim 9,
**characterised in that** the transmission bus is equipped to resolve conflicts when several detection modules transmit simultaneously by establishing a dialogue of the multi-master type.

11. Installation according to one of Claims 1 to 10,
**characterised in that** the detection modules are connected in series and/or in parallel to a connecting cable connected to the central processing unit.
